# EUROPÄISCHE PATENTSCHRIFT

(11) **EP 1 156 941 B1**
(45) Veröffentlichungstag und Bekanntmachung des Hinweises auf die Patenterteilung: **21.01.2004**
(21) Anmeldenummer: 00922495.7
(22) Anmeldetag: 03.03.2000
(51) Int. Cl.: B60J 7/043

(54) **VORRICHTUNG ZUR BETÄTIGUNG EINER ABDECKUNG**
DEVICE FOR OPERATING A COVER
DISPOSITIF POUR L'ACTIONNEMENT D'UNE COUVERTURE

(30) Priorität: 05.03.1999 NL 1011473
(43) Veröffentlichungstag der Anmeldung: 28.11.2001
(73) Patentinhaber: Webasto Vehicle Systems International GmbH, 82131 Stockdorf (DE)
(72) Erfinder: HUYER, Johannes, Nicolaas, NL-2042 BJ Zandvoort (NL)
(74) Vertreter: Wiese, Gerhard
(86) Internationale Anmeldenummer: PCT/EP2000/001891
(87) Internationale Veröffentlichungsnummer: WO 2000/051835

(56) Entgegenhaltungen:
- GB-A- 2 164 006
- US-A- 4 696 511
- US-A- 5 765 907

## Beschreibung

Die vorliegende Erfindung betrifft eine Vorrichtung zur Betätigung einer Abdeckung zum wahlweisen Verschließen einer Öffnung in einer diese umgebenden Fläche in einer ersten Position oder zum wenigstens teilweisen Freilegen der Öffnung in einer zweiten Position, wobei die Abdeckung insbesondere von einem Deckel in einer Öffnung in einem die Fläche bildenden Dach eines Fahrzeugs gebildet wird, und wobei die Vorrichtung folgende Mittel umfaßt:
- einen Schwenkarm, der sich von einem vorderen Ende zu einem hinteren Ende erstreckt und der mit Mitteln zur Befestigung der Abdeckung versehen ist;
- Hebemittel, um an dem Schwenkarm eine Schwenkbewegung relativ zu der Fläche zu erzeugen, und
- Antriebsmittel, um die Hebemittel mit Kraft zu beaufschlagen und die Abdeckung (2) zwischen der ersten und der zweiten Position zu bewegen.

Die Vorrichtung nach der vorliegenden Erfindung ist insbesondere für eine Betätigung eines verstellbaren Deckels in einem öffnungsfähigen Dach eines Automobils geeignet. Mittels der Vorrichtung wird die Abdeckung verschiebbar auf dem Dach des Autos befestigt.

Eine Vorrichtung der eingangs genannten Gattung ist aus dem europäischen Patent 0 543 427 bekannt. Bei dieser ist die Abdeckung in einem Rahmen befestigt, der um eine Öffnung im Dach angebracht ist. Die Abdeckung ist an zwei Schwenkarmen befestigt, die zu beiden Seiten der Abdeckung befestigt sind. Mittels dieser Arme kann die Abdeckung relativ zu dem Rahmen schwenken. Das vordere Ende jedes der Schwenkarme ist über einen Koppelarm gelenkig mit einem vorderen Teil eines Antriebsschiebers verbunden. Diese Schieber können in der Schiene verschoben werden. Auf jedem dieser Schieber ist außerdem, an dem jeweiligen hinteren Ende, ein Hebel montiert, der gelenkig mit dem Schwenkarm verbunden ist. Beim Öffnen der Abdeckung werden die Antriebsschieber, zum Beispiel mittels eines Kabels, von einem vorderen Ende der Schiene in die hintere Richtung verschoben. Beim ersten Teil dieser Bewegung schwenkt die Abdeckung mittels der Hebel in eine gekippte Stellung oder Hebestellung. Die Abdeckung schwenkt dabei, in der Fahrtrichtung des Fahrzeugs gesehen, um die Frontseite, so daß die Rückseite der Abdeckung über das Dach hinausragt. Zwischen der Rückseite der Abdeckung und dem Dach entsteht dabei ein Lüftungsspalt. Das Aufschieben des Dachs erfolgt durch Weiterbewegen der Antriebsschieber in hinterer Richtung. Da die Schwenkarme und die Hebel mit den Antriebsschiebem verbunden sind, verschieben sich diese Schwenkarme und Hebel zusammen mit der darauf montierten Abdeckung insgesamt (in gekippter Stellung) in hinterer Richtung der Öffnung. Durch diese Schiebebewegung wird der vordere Teil der Öffnung freigegeben.

Bei offenen Dächern von Automobilen ist es ein Ziel, daß das Verhältnis zwischen der Fläche der Öffnung, die in dem Dach vorgesehen ist (Größe der Abdeckung) und der Fläche, die tatsächlich freigegeben werden kann (maximal geöffnete Stellung), möglichst günstig ist. In dem Fall, in dem die Abdeckung über einen relativ großen Abstand versetzt werden kann, kann eine relativ kleine Öffnung ausreichen, um eine gewünschte Fläche des Dachs zu öffnen. Ein solches günstiges Verhältnis zwischen der Größe der Abdeckung und der tatsächlich zu öffnenden Fläche setzt bei einer Vorrichtung nach dem Stand der Technik voraus, daß der Abstand zwischen dem Drehpunkt des Hebels mit dem Antriebsschieber bis zum Drehpunkt des vorderen Endes des Schwenkarms möglichst klein gehalten wird. Dieser Abstand zwischen dem Drehpunkt an dem vorderen Ende des Schwenkarms und dem Drehpunkt des Hebels entspricht der Länge der Strecke, über die die Abdeckung mit der unterstützenden Führungsschiene verbunden ist und wird auch wohl als Abstütz-Basis der Vorrichtung bezeichnet. Diese Abstütz-Basis ist insbesondere für die Stabilität der Abdeckung in der geöffneten Position von Bedeutung. Es dürfte klar sein, daß in der geöffneten Stellung die Abdeckung insbesondere bei höheren Geschwindigkeiten erheblichen Windkräften ausgesetzt ist. Um zu verhindern, daß sich die Vorrichtung unter dem Einfluß der durch den Wind ausgeübten Kräfte verbiegt oder auf andere Weise beeinträchtigt wird, muß die Stabilität der Abdeckung und der sie abstützenden Vorrichtung ausreichend groß sein.

In der Vorrichtung nach dem vorstehend genannten europäischen Patent steht der Wunsch, die Öffnung so weit wie möglich frei zu geben, im Widerspruch zu dem Wunsch, die Abdeckung in der geöffneten Stellung möglichst stabil zu halten.

Aus der gattungsgemäßen US-A-4 696 511 ist eine eingangs genannte Vorrichtung zur Betätigung einer Abdeckung zum wahlweisen Verschließen einer Öffnung bekannt geworden. Bei dieser handbetätigten Vorrichtung enthält der Schwenkarm zwei Elemente, die verschiebbar und teleskopisch miteinander verbunden sind, wobei das Ende eines der Elemente über einen Drehpunkt gelenkig mit einem ortsfesten Teil der Vorrichtung verbunden ist.

Aus der US-A-5 765 907 ist eine Vorrichtung zur Betätigung einer Abdeckung bekannt geworden sowie Antriebsmittel, um die Hebemittel mit Kraft zu beaufschlagen und die Abdeckung zwischen der ersten und der zweiten Position zu bewegen.

Aufgabe der Erfindung ist es, eine Vorrichtung der eingangs genannten Gattung zu schaffen, mit deren Hilfe eine Abdeckung aus einer geschlossenen Position in eine geöffnete Position bewegt werden kann, wobei einerseits die Abdeckung so weit wie möglich versetzt werden kann, um die Öffnung möglichst weit frei zu geben, während andererseits die Stabilität der Abdeckung während der gesamten Bewegung der Abdeckung ausreichend groß bleibt.

Diese Aufgabe wird in der vorliegenden Erfindung gelöst, indem der Schwenkarm wenigstens zwei Elemente aufweist, die verschiebbar oder teleskopisch miteinander verbunden sind, wobei das vordere Ende eines der Elemente über einen Drehpunkt gelenkig mit einem ortsfesten Teil der Vorrichtung oder der Fläche verbunden ist.

Durch diese Maßnahme wird bewirkt, daß der Drehpunkt des Schwenkarms dem Untergrund, das heißt der Fläche, gegenüber unbeweglich ist. Dies bedeutet, daß sich der Schwenkarm beim Öffnen der Abdeckung nicht als ein Ganzes mit der Abdeckung gemeinsam relativ zu der Fläche bewegt, sondern daß der Schwenkarm beim Aufschieben der Abdeckung in seiner Länge zunimmt. Die Hebemittel, zum Beispiel in der Form eines Hebels, können sich mit der Abdeckung mitbewegen. Der ortsfeste Drehpunkt zwischen dem Schwenkarm und der Fläche einerseits und der mitbewegende Drehpunkt zwischen der Fläche und den Hebemitteln andererseits bewirken, daß die Länge der Abstütz-Basis der Vorrichtung während des Öffnens der Abdeckung zunimmt. Dies ist vorteilhaft für die Stabilität.

Die Winkelverdrehung der Abdeckung gegenüber dem Untergrund wird einerseits durch die Länge der Hebemittel und andererseits durch den Abstand der Hebemittel zu dem ortsfesten Drehpunkt bestimmt. Dadurch wird die Winkelverdrehung der Abdeckung relativ zu dem Untergrund abnehmen, wenn die Abdeckung nach außen geschoben wird. Hierdurch wird der Windwiderstand der Abdeckung in Richtung zu deren vollständiger Öffnung zunehmend reduziert.

Gemäß einer bevorzugten Ausführungsform ist es möglich, daß der Schwenkarm ein Zwischenelement aufweist, das einerseits verschiebbar mit einem ersten Element verbunden ist und das andererseits verschiebbar mit einem dritten Element verbunden ist. Dabei ist es möglich, daß die Mittel zur Befestigung der Abdeckung an dem dritten Element angebracht sind.

Durch diese Maßnahme ist es möglich, daß die Abdeckung an dem hinteren Element angebracht ist, das verschiebbar auf dem ersten beziehungsweise dem Zwischenelement des Schwenkarms angebracht ist, Es ist dadurch möglich, daß die Bewegungsfreiheit der Abdeckung relativ zu dem ortsfesten Drehpunkt weiter vergrößert wird. Die Extremposition der Abdeckung relativ zu dem ortsfesten Drehpunkt wird nicht durch den Abstand zwischen dem ortsfesten Drehpunkt und dem Ende des zweiten Elements beziehungsweise dem Abstand zwischen dem ortsfesten Drehpunkt und dem Hebel bestimmt. Durch die zusätzliche Länge, die das dritte Element bietet, kann die Abdeckung noch weiter aus der Öffnung geschoben werden. Dadurch ist es möglich, die Öffnung im vollständig geöffneten Zustand über eine relativ große Fläche frei zu geben.

Weiter ist es nach der vorliegenden Erfindung möglich, daß die Elemente des Schwenkarms als Teleskopelemente ausgeführt sind, wobei das vordere Element mit einem ersten Ende eines flexibler Zug-Druck-Elements verbunden ist, das über eine Führungsnut nahe dem hinteren Ende des Zwischenelements zu einer Befestigung für ein zweites Ende des Zug-Druck-Elements geführt wird, welche Befestigung an dem dritten Element angebracht ist.

Mittels des Zug-Druck-Elements wird bewirkt, daß automatisch das hintere Element ebenfalls relativ zu dem vorderen Element bewegt wird, wenn das Zwischenelement relativ zu dem vorderen Element bewegt wird. Da sich das Zug-Druck-Element von dem vorderen Element über eine Führungsnut im Zwischenelement zu einer Befestigung am hinteren Element erstreckt, wird bei einer Bewegung des Zwischenelements relativ zu dem vorderen Element das hintere Element eine Bewegung relativ zu dem Zwischenelement ausführen, welche größer als die Bewegung des Zwischenelements relativ zu dem vorderen Element ist. Wenn sich das Zug-Druck-Element bei der Bewegung der jeweiligen Teile nicht ausdehnt oder auf andere Weise in der Länge ändert, wird das hintere Element sich exakt zweimal so schnell wie das Zwischenelement bewegen. Somit kann durch einen kurzen Betätigungsweg eine große Verschiebebewegung der Abdeckung erzeugt werden.

Gemäß einer vorteilhaften Ausführungsform ist es möglich, daß die Vorrichtung eine Führungsschiene umfaßt, die sich in Längsrichtung der Öffnung an deren Seiten von einem vorderen Ende zu einem hinteren Ende erstreckt, wobei die Antriebsmittel mit den Hebemitteln über einen Antriebsschieber verbunden sind, der in der Führungsschiene zwischen dem vorderen und dem hinteren Ende der Schiene bewegt werden kann, und wobei die Hebemittel mit einem ersten Ende mit dem Antriebsschieber und mit einem zweiten Ende mit dem Schwenkarm verbunden sind. Dabei ist es möglich, daß die Hebemittel mit ihrem zweiten Ende mit dem Zwischenelement verbunden sind und daß die Hebemittel einen Hebel umfassen, wobei der Hebel mit dem ersten Ende gelenkig mit dem Antriebsschieber verbunden ist und mit dem zweiten Ende gelenkig mit dem Zwischenelement verbunden ist.

Der Antriebsschieber und somit der darauf angelenkte Hebel können zum Aufschieben des Dachs zusammen in hinterer Richtung verschoben werden. Die maximal aufgeschobene Position wird erreicht, wenn der Antriebsschieber das hintere Ende der Schiene erreicht. In dieser Stellung wird der Schwenkarm maximal ausgeschoben sein. Indem das hintere Element relativ zu dem Zwischenelement bewegt ist, kann ein sehr günstiges Verhältnis zwischen der Oberfläche der Abdeckung und dem aufgeschobenen Teil der Öffnung erreicht werden. Weiter wird die Abstütz-Basis in der maximalen Stellung auch eine maximale Länge aufweisen und damit einen günstigen Einfluß auf die Stabilität haben.

Nach der Erfindung ist es möglich, daß das System einen Koppelarm umfaßt, der mit einem ersten Ende gelenkig mit dem Antriebsschieber und mit einem zweiten Ende gelenkig mit dem Zwischenelement verbunden ist.

Durch diese Maßnahme ist es aus der geschlossenen Stellung möglich, daß sich der Antriebsschieber zunächst für einen bestimmten Weg relativ zu dem Zwischenelement bewegt. In dieser Strecke wird der Antriebsschieber vor allem den Hebel rotieren lassen und damit die Abdeckung relativ zu dem Dach schwenken lassen.

Die vorliegende Erfindung ist insbesondere für eine Betätigung eines Deckels eines öffnungsfähigen Dachs für ein Fahrzeug geeignet. Es sind jedoch auch andere Abdeckungen, wie beispielsweise Dachluken an Gebäuden, vorteilhaft damit betätigbar.

Die vorliegende Erfindung wird weiter anhand der Zeichnungen erläutert. Es zeigt:
- Fig. 1: einen Teil eines Dachs eines Automobils, in dem eine zu öffnende Abdeckung angebracht ist;
- Fig. 2: die einzelnen Teile, die in einer Ausführungsform der Vorrichtung nach der vorliegenden Erfindung verwendet werden;

- Fig. 3: die Vorrichtung für ein offenes Dach nach der vorliegenden Erfindung in der geschlossenen Stellung;
- Fig. 4: die Vorrichtung nach der vorliegenden Erfindung in ausgestelltem Zustand;
- Fig. 5: die Vorrichtung nach der vorliegenden Erfindung in ausgeschobenem Zustand;
- Fig. 6: ein Detail der Befestigung der Teleskopelemente der Vorrichtung nach der vorliegenden Erfindung in geschlossener Stellung; und
- Fig. 7: die Befestigung der drei Teleskopelemente in einer wenigstens teilweise geöffneten Stellung.

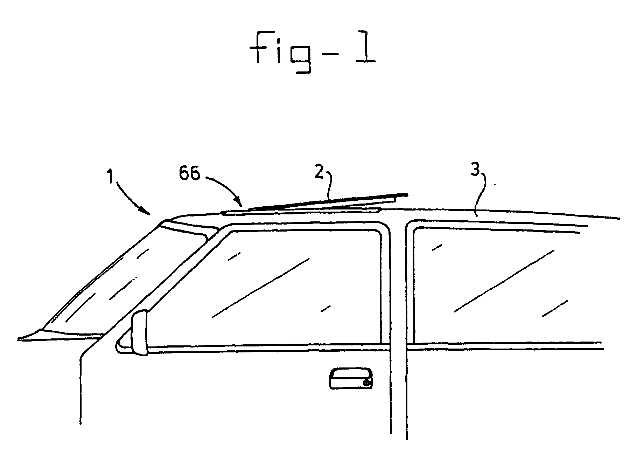

Figur 1 zeigt einen Teil eines Automobils 1, wobei in dem Dach 3 ein Deckel als Abdeckung 2 angebracht ist. Die Abdeckung 2 ist in einer Öffnung 66 in dem als umgebende Fläche fungierenden Dach 3 angebracht. Die Abdeckung 2 läßt sich zwischen einer ersten Position, in der die Abdeckung 2 die Öffnung 66 verschließt, und einer zweiten Position verschieben, in der die Abdeckung 2 zur Heckseite des Fahrzeugs hin verschoben ist, so daß die Öffnung 66 wenigstens teilweise freigelegt wird. In Figur 1 ist das Dach teilweise geöffnet, wodurch die Abdeckung 2 aus dem Dach des Wagens 1 herausragt.

Um die Abdeckung 2 aus der ersten, geschlossenen Position in die zweite, geöffnete Position versetzen zu können, wird die Abdeckung 2 normalerweise zunächst um eine Schwenkachse in eine Hebestellung gekippt und danach nach hinten geschoben. Dies bedeutet, daß die Abdeckung in der schrägen Stellung nach hinten bewegt wird. Die gekippte oder Hebe-Stellung wird normalerweise dazu verwendet, den Innenraum effektiv zu lüften, während das Windgeräusch niedrig gehalten wird. Es ist klar, daß die Abdeckung 2 in der geöffneten Position als Windwiderstand fungieren wird. In erster Linie ist es aus aerodynamischer Sicht wichtig, daß die Windmenge, die die Abdeckung 2 aufnimmt, möglichst gering ist. Außerdem ist es so, daß je mehr Widerstand die Abdeckung erfahren wird, um so größer die Kräfte sein werden, die auf den Mechanismus einwirken, mit dessen Hilfe die Abdeckung 2 aus dem Dach 3 herausbewegt wird. Aus den vorstehend dargelegten Gründen ist es deshalb vorteilhaft, wenn die Abdeckung 2 in der geöffneten Position möglichst nahe an dem Dach 3 des Wagens bleibt. Dies bedeutet, daß auch die Winkelverdrehung, um die die Abdeckung geschwenkt wird, möglichst klein gehalten wird.

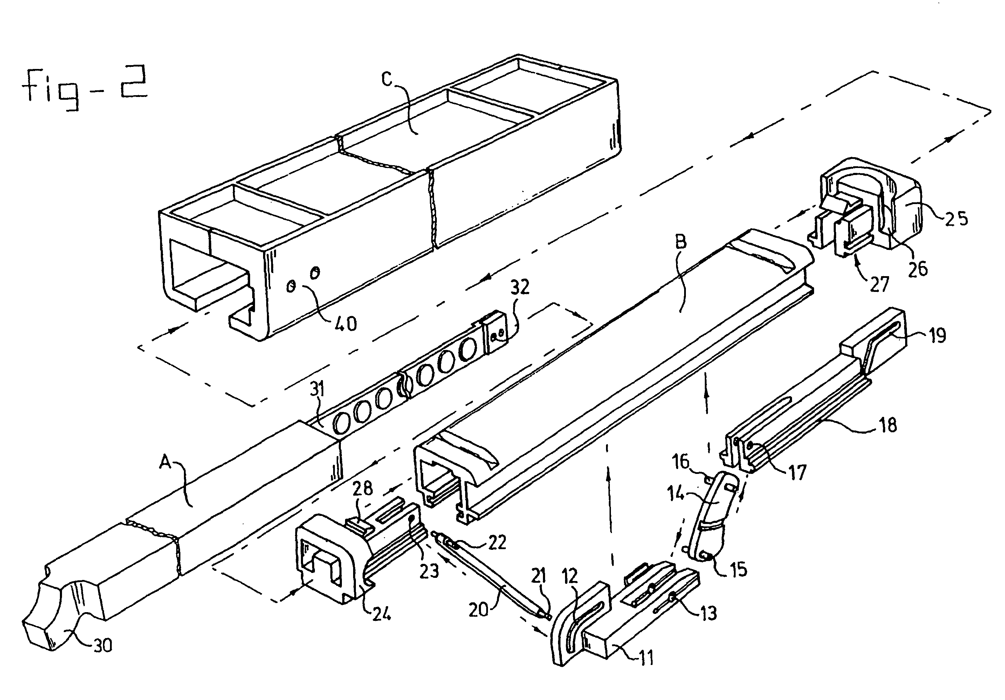

In der Figur 2 werden die Teile gezeigt, die in der Vorrichtung verwendet werden, das heißt, die dazu benutzt wird, die Abdeckung 2 nach außen zu schieben, wie dies in der Figur 1 gezeigt wird. Zu beiden Seiten der Dach-Öffnung 66 ist jeweils eine feste Führungsschiene 60 montiert, in denen jeweils ein Antriebsschieber 11 verschiebbar geführt ist. Dieser Antriebsschieber 11 umfaßt in seinem oberen Teil eine Führungsnut 12. Außerdem umfaßt der Antriebsschieber 11 Befestigungsösen 13, in die drehbar ein Hebel 14 eingesetzt werden kann.

Dieser Hebel 14 ist einerseits durch in die Befestigungsösen 13 des Antriebsschiebers 11 eingreifende Stifte 15 verbunden und ist andererseits durch Stifte 16 drehbar mit einem Befestigungsteil 17 verbunden, das in einem Schiebeteil 18 angeordnet ist. Das Schiebeteil 18 umfaßt darüberhinaus eine gekrümmte Führungsbahn 19.

An dem Antriebsschieber 11 ist nicht nur der Hebel 14 befestigt, sondern auch ein Koppelarm 20. Dieser Koppelarm 20 ist mittels erster Stifte 21 verschiebbar und drehbar in der Führungsnut 12 befestigt. Weiter umfaßt der Koppelarm 20 Stifte 22, mit deren Hilfe er drehbar in einem Aufnahmeteil 23 verbunden ist, das in einem ersten Endblock 24 angebracht ist. Dieser erste Endblock 24 wird nachstehend im Einzelnen erläutert.

Der Antriebsschieber 11 bildet zusammen mit dem Hebel 14, dem Schiebeteil 18 und dem Koppelarm 20 den "Antriebsteil" der Vorrichtung nach der vorliegenden Erfindung.

Der Schwenkarm der Vorrichtung, mit dem die Abdeckung 2 aus dem Auto herausbewegt wird, wird von drei Teleskopelementen A, B beziehungsweise C gebildet. Auf der Oberseite des Teleskopelements C wird die Abdeckung 2 befestigt. Der Deutlichkeit halber ist in der Figur 2 die Abdeckung 2 nicht dargestellt. Das erste Teleskopelement A hat an einem vorderen Ende ein Scharnierteil 30. Am anderen Ende des Teleskopelements A ist ein flexibles Zug-Druck-Element 31 befestigt. Mittels dieses flexiblen Zug-Druck-Elements 31 wird das Teleskopelement A mit dem Teleskopelement C verbunden.

Das Teleskopelement A wird verschiebbar geführt in das Teleskopelement B eingesetzt. Dieses Teleskopelement B wird seinerseits verschiebbar geführt in dem Teleskopelement C angebracht. Das Schiebeteil 18 wird dabei auch verschiebbar geführt in dem Teleskopelement B untergebracht sein.

Das Teleskopelement B ist an beiden Seiten mit einem Endblock versehen. An der in der Figur 2 dargestellten Vorderseite ist ein erster Endblock 24 zu erkennen, der an dem ersten Ende des Teleskopelements B angebracht werden kann. Der erste Endblock 24 ist mittels Befestigungsmitteln 28 in Form einer bewegbaren Klammer mit einer in einen Schlitz eingreifenden Rastnase in dem Element B befestigt. An dem gegenüberliegenden Ende des Teleskopelements B wird ein zweiter Endblock 25 angebracht. Dieser zweite Endblock 25 ist mit einer Führungsnut 26 versehen, um das flexiblen Zug-Druck-Element 31 in Form einer Umlenkung um 180° zu führen. Außerdem ist der zweite Endblock 25 mit Befestigungsmitteln 27 in Form einer bewegbaren Klammer mit einer in einen Schlitz eingreifenden Rastnase versehen, mit deren Hilfe der zweite Endblock 25 in dem Teleskopelement B befestigt wird.

Die Teleskopelemente A, B und C werden verschiebbar zueinander mittels eines flexiblen Zug-Druck-Elements 31 befestigt. Dieses flexible Zug-Druck-Element 31 ist mit einem Ende an dem hinteren Ende des Teleskopelements A befestigt. An seinem anderen Ende ist der flexible Zug-Druck-Element 31 mit Befestigungsmitteln 32 für die Befestigung des flexiblen Zug-Druck-Elements 31 an dem Teleskopelement C versehen. Für die Befestigung des flexiblen Zug-Druck-Elements 31 ist das Teleskopelement C mit Befestigungsmitteln 40 versehen. In dem zusammengeschobenen Zustand wird das flexible Zug-Druck-Element 31 vom Ende des Teleskopelements A über die Führungsnut 26 in dem zweiten Endblock 25 in Richtung der Befestigungsmittel 40 des Teleskopelements C geführt. Durch diese Vorrichtung wird erreicht, daß die Teleskopelemente A, B und C zwar miteinander verbunden sind, jedoch relativ zueinander verschoben werden können. Der flexible Zug-Druck-Element 31 kann in unterschiedlichen Weisen ausgeführt werden. Eine mögliche Ausführungsform, besteht darin, daß ein dünner biegsamer Streifen, aus zum Beispiel Nirosta, zwischen zwei ebenfalls biegsamen Streifen aus einem Kunststoff eingeschlossen wird. Für eine gute Führung des Zug-Druck-Elements 31 hat der Kunststoff des Zug-Druck-Elements 31 zusammen mit dem Material der Führungsnut 26 in dem zweiten Endblock 25 einen relativ geringen Reibungskoeffizienten.

Die Wirkung der Teleskopelemente nach der vorliegenden Erfindung wird weiter anhand der Figuren 3, 4 und 5 erläutert.

In der Figur 3 ist der Fall dargestellt, in dem sich die Abdeckung 2 in geschlossenem Zustand befindet. In den Figuren 3, 4 und 5 wird die linke Seite der Zeichnungen immer als die Vorderseite oder die vordere Seite bezeichnet. Die rechte Seite in den Zeichnungen ist die Rückseite oder die hintere Seite. Diese Angaben werden wegen der Funktion des Schiebedachs gemacht, das in der Verwendung von der Vorderseite eines Fahrzeugs zur Rückseite des Fahrzeugs hin versetzt werden kann. In der Figur 3 ist zu sehen, daß die jeweiligen Teleskopelemente A, B und C ineinander geschoben sind. Das Teleskopelement A ist mit seinem vorderen Teil 30 drehbar in einer Führungsnut 50 befestigt, die in einem Rahmen 51 aufgenommen wird. In der Figur 3 ist auch zu sehen, daß die Abdeckung an der Rückseite auch über einen Rahmen 52 an das Dach 3 anschließt. Um zu vermeiden, daß durch eine Vielzahl von Linien Unklarheit entsteht, sind in der Figur 3 der Koppelarm 20 und der Hebel 14 durch eine Linie dargestellt. Zwischen dem Rahmen 51 und dem Dach 3 ist eine Dichtung 71 angebracht, um etwaiges Lecken zu vermeiden. Eine solche Dichtung 72 ist auch zwischen dem Rahmen 52 und dem Dach 3 angebracht. Zwischen der Abdeckung 2 und den jeweiligen Rahmen 51 und 52 können auch Dichtungen angebracht sein. Diese Dichtungen sind nicht in der Figur dargestellt. Es ist klar, daß die Dichtungen aus jedem geeigneten Material bestehen können, wie zum Beispiel Gummi.

In der Figur 3 ist weiter zu erkennen, daß der Antriebsschieber 11 schiebfähig in einer Führungsschiene 60 untergebracht ist. Diese Führungsschiene 60 erstreckt sich in Längsrichtung des Fahrzeugs 1, in dem die Vorrichtung angebracht ist. Mit dieser Führungsschiene 60 sind ein erster fester Nocken 61 und ein zweiter fester Nocken 62 verbunden. Das heißt, diese Nocken 61 bzw. 62 sind der Führungsschiene 60 gegenüber nicht versetzbar. Wie nachstehend noch erörtert wird, werden diese Nocken 61 und 62 zum Auswärtsschwenken der Abdeckung 2 beim Öffnen der Abdeckung 2 und zum nach innen Schwenken der Abdeckung 2 beim Schließen der Abdeckung verwendet.

Mit dem Antriebsschieber 11 sind weiter Antriebsmittel 63 verbunden, mit deren Hilfe der Antriebsschieber 11 in den Figuren 3 bis 5 nach links oder nach rechts bewegt werden kann. Diese Antriebsmittel 63 sind schematisch mit einer Linie dargestellt worden. Die Antriebsmittel 63 können zum Beispiel von einem Kabel gebildet werden, das von einem (nicht dargestellten) Motor angetrieben wird.

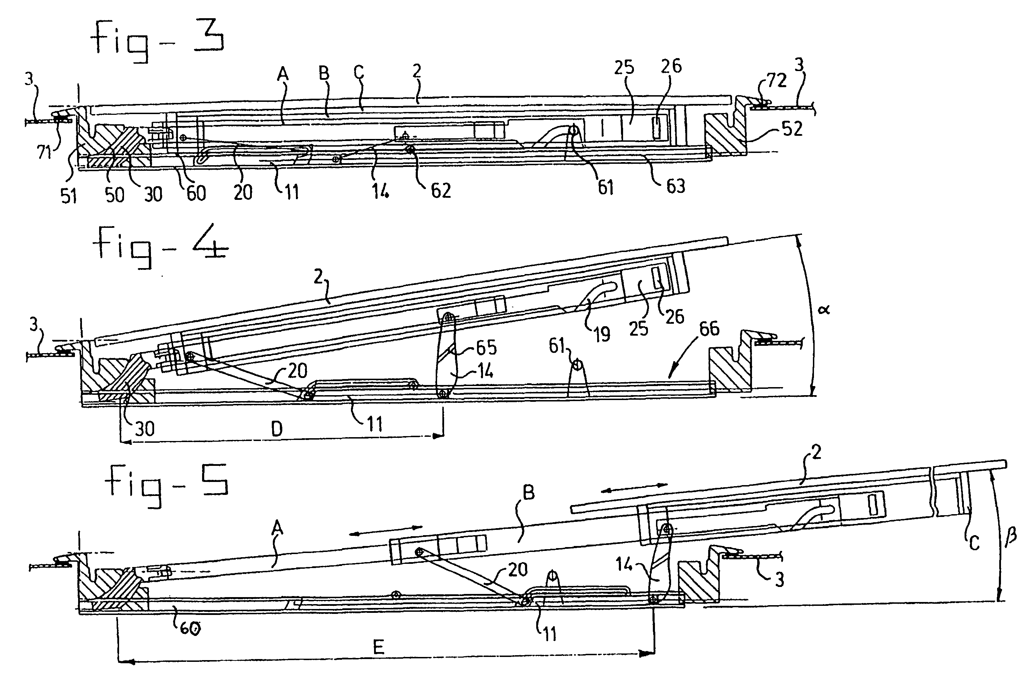

In der Figur 4 ist die Vorrichtung nach der vorliegenden Erfindung zu sehen, wobei die Abdeckung 2 über einen Winkel α relativ zu dem Dach 3 des Fahrzeugs gekippt ist. Dieses Kippen ist in erster Linie durch die Verschiebung des Antriebsschiebers 11 ausgelöst. Der Führungsschlitz 19 wird über den festen Nocken 61 bewegt. Durch die Form der Bahn dieses Führungsschlitzes 19 über den festen Nocken 61 ist die Abdeckung 2 schon etwas nach auswärts bewegt. Zweitens wird die Schwenkbewegung mittels eines Hebels 14 bewirkt. Dieser Hebel 14 ist mit einem Schlitz 65 versehen, welcher Schlitz mit dem festen Nocken 62 zusammenwirkt. Durch die Verschiebung des Antriebsschiebers 11 wird der damit gekoppelte Hebel 14 über den Führungsschlitz über den festen Nocken 62 bewegt. Durch diese Bewegung wird die Abdeckung 2 durch den Hebel 14 auswärts gekippt. Die Wirkung des Schlitzes 65, der in dem Hebel 14 angebracht ist, zusammen mit dem Führungsschlitz 19, der in dem Schiebeteil 18 angebracht ist, kann zum Beispiel ebenso wie die Schwenkvorrichtung ausgeführt werden, die aus dem europäischen Patent 0 543 427 bekannt ist. Für eine detaillierte Wirkung dieser Schwenkbewegung wird deshalb hier auf jenes europäische Patent Bezug genommen.

Der Drehpunkt für die Kippbewegung der Abdeckung 2 wird von dem herausragenden Teil 30 an dem Teleskopelement A gebildet. Von der Stellung aus, die in der Figur 4 dargestellt wird, wird der Teleskopmechanismus, an dem die Abdeckung 2 befestigt ist, weiter ausgeschoben, indem der Antriebsschieber 11 weiter in Richtung der Rückseite der Öffnung 66 in dem Dach 3 geschoben wird. Indem der Antriebsschieber 11 weiter bewegt wird, wird das Teleskopelement B von dem Koppelarm 20 weiter nach rechts bewegt (wie dies in der Zeichnung dargestellt ist). Indem das Teleskopelement B nach rechts bewegt wird, wird auch das Teleskopelement C weiter nach rechts bewegt.

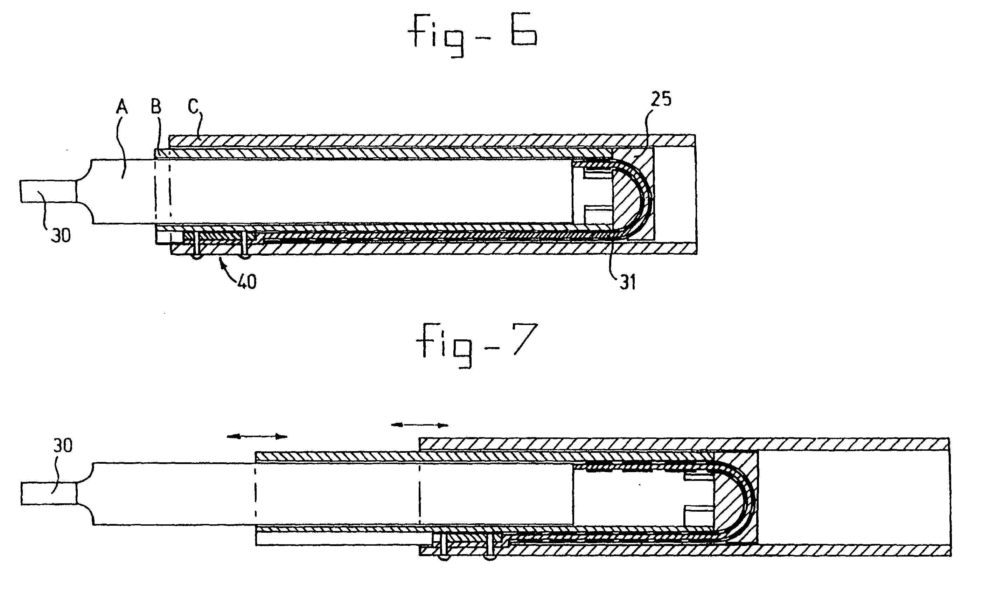

Die extreme Öffnungsposition des Mechanismus nach der vorliegenden Erfindung wird in der Figur 5 dargestellt. Wie ersichtlich ist, bildet die Abdeckung 2 in der Position nach der Figur 5 einen Winkel β mit dem Dach 3. Dieser Winkel β ist kleiner als der Winkel α, der in der Figur 4 dargestellt ist. Wie vor allem in den Figuren 4 und 5 zu erkennen ist, ist das Teleskopelement B mit der Führungsschiene 60 einerseits über den Koppelarm 20 und andererseits über den Hebel 14 verbunden. Die Bewegung des Teleskopelements C wird durch die Kopplung des Teleskopelements C mit dem Teleskopelement A über das flexible Zug-Druck-Element 31 bewirkt. Diese Befestigung wird weiter anhand der Figuren 6 und 7 erläutert. Da die jeweiligen Teleskopelemente A, B und C einen gemeinschaftlichen Drehpunkt aufweisen, der von dem herausragenden Teil 30 gebildet wird, der an dem Teleskopelement A befestigt ist, wird die Rückseite der Abdeckung 2 relativ nahe über dem Dach 3 bleiben. Dies wird vor allem durch einen Vergleich zwischen den Figuren 4 und 5 ersichtlich. Die Wnkelverdrehungen α und β , die in den Figuren 4 und 5 dargestellt sind, werden einerseits von der Länge des Hebels 14 und andererseits von dem Abstand des Hebels 14 bis zum Drehpunkt des herausragenden Teils 30 in dem Rahmen 51 bestimmt. Je weiter der Hebel 14 nun nach rechts bewegt wird (in einer dem Drehpunkt abgewandten Richtung), um so kleiner wird der resultierende Winkel zwischen der Abdeckung 2 und dem Dach 3 sein.

Wie vorstehend schon angegeben ist, ist es die Aufgabe der vorliegenden Erfindung, eine Vorrichtung für die Befestigung einer Abdeckung in einer Öffnung eines Dachs beispielsweise eines Fahrzeugs zu schaffen, bei der die Abdeckung in der geöffneten Position die Öffnung im Wesentlichen frei gibt, und wobei die Stabilität der Abdeckung in der geöffneten Position relativ groß ist. Außerdem ist es vorteilhaft, daß die Abdeckung in der senkrechten Richtung über einen relativ geringen Abstand relativ zu dem Dach versetzt wird. Durch die vorstehend beschriebene Weise des Hinausschiebens der Abdeckung 2 werden diese Aufgaben gelöst.

Außerdem wird erreicht, daß die Stabilität der Abdeckung 2 über die gesamte Hebebewegung der Abdeckung 2 hinweg relativ hoch gehalten wird. Die Abstütz-Basis des Mechanismus, der zum Hinausschieben der Abdeckung 2 verwendet wird, wird von dem Abstand zwischen dem Hebel 14 und dem Drehpunkt gebildet, der von dem herausragenden Teil 30 gebildet wird. Die Abstütz-Basis, die in der Figur 4 dargestellt ist, hat eine Länge D. Beim Auswärtsschieben der Abdeckung 2 aus der Öffnung 66 nimmt der Abstand des Hebels 14 zum Drehpunkt 30 zu. Die Abstütz-Basis, die in der Figur 5 dargestellt ist, hat eine Länge E. Dies bedeutet, daß die Länge der Abstütz-Basis während des Auswärtsschiebens der Abdeckung 2 zunimmt. Dies bedeutet also, daß im Gegensatz zur eingangs gewürdigten bekannten Mechanik die Stabilität der Abdeckung 2 beim Hinausschieben der Abdeckung 2 positiv beeinflußt wird.

In der Figur 6 ist die Befestigung der Teleskopelemente A, B und C zu sehen, wobei die einzelnen Elemente mittels des flexiblen Zug-Druck-Elements 31 miteinander verbunden sind. Wie gesagt, ist das Teleskopelement A an dessen Rückseite mit dem Zug-Druck-Element 31 verbunden. Dieses Zug-Druck-Element 31 wird über eine in der Draufsicht U-förmige Führung 26 in dem Endblock 25 um 180° umgelenkt und in Richtung der Befestigung 40 geführt, die in dem Teleskopelement C angebracht ist. Das Element 30, das das vordere Ende des Teleskopelements A bildet, ist in der Bewegungsrichtung der Abdeckung 2 im Wesentlichen fest mit dem Untergrund verbunden. Dies heißt, daß während des Hinausschiebens der jeweiligen Teleskopelemente A, B und C, wenn das Teleskopelement B mittels der Antriebsmittel in der dem Element 30 abgewandten Richtung bewegt wird, das Element C relativ zu dem Element A mitgeführt wird.

In der Figur 7 ist die Position dargestellt, in der die Elemente A, B und C ein wenig auseinander bewegt sind. Durch die Führung des flexiblen Zug-Druck-Elements 31 über die Führungsnut 26 in dem Endblock 25 wird das Element C sich relativ zu dem Element A mit der zweifachen Geschwindigkeit des Elements B bewegen.

Vorstehend ist der Fall erwähnt worden, in dem die Abdeckung 2 von einer geschlossenen Position mittels des Mechanismus der vorliegenden Erfindung nach außen geführt wird. Es ist klar, daß mittels des Mechanismus die Abdeckung 2 auch in die geschlossene Position zurückgeführt wird, wenn die Handlungen im Wesentlichen in der Reihenfolge der Figuren 5, 4 und 3 ausgeführt werden.

## Patentansprüche

1. Vorrichtung zur Betätigung einer Abdeckung (2) zum wahlweisen Verschließen einer Öffnung (66) in einer diese umgebenden Fläche (3) in einer ersten Position oder zum wenigstens teilweisen Freilegen der Öffnung (66) in einer zweiten Position, wobei die Abdeckung (2) insbesondere von einem Deckel in einer Öffnung in einem die Fläche (3) bildenden Dach eines Fahrzeugs gebildet wird, und wobei die Vorrichtung folgende Mittel umfaßt:
- einen Schwenkarm, der sich von einem vorderen Ende zu einem hinteren Ende erstreckt und der mit Mitteln zur Befestigung der Abdeckung (2) versehen ist;
- Hebemittel (14), um an dem Schwenkarm eine Schwenkbewegung relativ zu der Fläche (3) zu erzeugen, und
- Antriebsmittel (63), um die Hebemittel (14) mit Kraft zu beaufschlagen und die Abdeckung (2) zwischen der ersten und der zweiten Position zu bewegen **dadurch gekennzeichnet, daß** der Schwenkarm wenigstens ein erstes und drittes Element (A, C), die verschiebbar oder teleskopisch miteinander verbunden sind, wobei das Ende (30) eines der Elemente (A) über einen Drehpunkt (50) gelenkig mit einem ortsfesten Teil der Vorrichtung oder der Fläche (3) verbunden ist, und ein Zwischenelement (B) umfaßt, das einerseits verschiebbar mit dem ersten Element (A) und andererseits verschiebbar mit dem dritten Element (C) verbunden ist.

2. Vorrichtung nach Anspruch 1, **dadurch gekennzeichnet, daß** die Mittel zur Befestigung der Abdeckung (2) an dem dritten Element (C) angebracht sind.

3. Vorrichtung nach Anspruch 1 oder 2, **dadurch gekennzeichnet, daß** die Elemente des Schwenkarms (A, B, C) als Teleskopelemente ausgeführt sind, wobei das erste Element (A) mit einem ersten Ende eines flexiblen Zug-Druck-Elements (31) verbunden ist, das über eine Führungsnut (26) nahe dem entfernteren Ende des Zwischenelements (B) zu einer Befestigung (40) für ein zweites Ende des Zug-Druck-Elements (31) geführt wird, welche Befestigung (40) an dem dritten Element (C) angebracht ist.

4. Vorrichtung nach einem der vorigen Ansprüche, wobei diese eine Führungsschiene (60) umfaßt, die sich in der Längsrichtung der Öffnung von einem näherliegenderen Ende zu einem entfernteren Ende erstreckt, **dadurch gekennzeichnet, daß** die Antriebsmittel (63) mit den Hebemitteln (14) über einen Antriebsschieber (11) verbunden sind, der in der Führungsschiene (60) zwischen dem näherliegenderen und dem entfernteren Ende der Schiene bewegt werden kann, wobei die Hebemittel (14) mit einem ersten Ende mit dem Antriebsschieber (11) und mit einem zweiten Ende mit dem Schwenkarm verbunden sind.

5. Vorrichtung nach Anspruch 4, **dadurch gekennzeichnet, daß** die Hebemittel (14) mit ihrem zweiten Ende mit dem Zwischenelement (B) verbunden sind.

6. Vorrichtung nach Anspruch 4 oder 5, **dadurch gekennzeichnet, daß** die Hebemittel einen Hebel (14) umfassen, der mit seinem ersten Ende gelenkig mit dem Antriebsschieber (11) verbunden ist und der mit dem zweiten Ende gelenkig mit dem Zwischenelement (B) verbunden ist.

7. Vorrichtung nach Anspruch 4, 5 oder 6, **dadurch gekennzeichnet, daß** sie einen Koppelarm (20) umfaßt, der mit einem ersten Ende gelenkig mit dem Antriebsschieber (11) verbunden ist und mit einem zweiten Ende gelenkig mit dem Zwischenelement (B) verbunden ist.

8. Offnungsfähiges Dach für ein Fahrzeug, versehen mit einer Vorrichtung nach einem der vorigen Ansprüche.

## Claims

1. Device for actuating a cover (2) for optionally closing an opening (66) in a surface (3) which surrounds the latter, in a first position, or for at least partially clearing the opening (66), in a second position, the cover (2) being formed in particular by a top in an opening in a roof in a motor vehicle, which roof forms the surface (3), and the device comprising the following means:
- a swivelling arm which extends from a f ront end to a rear end and which is provided with means for fixing the cover (2);
- lifting means (14) to produce a swivelling movement on the swivelling arm relative to the surface (3), and
- drive means (63) to apply force to the lifting means (14) and to move the cover (2) between the first and the second position,
**characterized in that** the swivelling arm comprises at least a first element and a third element (A, C) which are connected to one another such that they can be displaced or telescoped, the end (30) of one of the elements (A) being connected in an articulated manner via a fulcrum (50) to a stationary part of the device or the surface (3), and further comprises an intermediate element (B) which is connected by one end to the first element (A) such that it can be displaced and is connected by an opposite end to the third element (C) such that it can be displaced.

2. Device according to Claim 1, **characterized in that** the means for fixing the cover (2) are fitted to the third element (C).

3. Device according to Claim 1 or 2, **characterized in that** the elements of the swivelling arm (A, B, C) are designed as telescopic elements, the first element (A) being connected to a first end of a flexible tension-compression element (31) which is guided by a guide groove (26) close to the further end of the intermediate element (B) to a fixing (40), fitted to the third element (C), for a second end of the tension-compression element (31).

4. Device according to one of the preceding claims, further comprising a guide rail (60) which extends in the longitudinal direction of the opening from a nearer end to a further end, **characterized in that** the drive means (63) are connected to the lifting means (14) via a drive slide (11) that can be moved in the guide rail (60) between the nearer end and the further end of the guide rail, the lifting means (14) being connected to the drive slide (11) by a first end and to the swivelling arm by a second end.

5. Device according to Claim 4, **characterized in that** the lifting means (14) are connected to the intermediate element (B) by their second end.

6. Device according to Claim 4 or 5, **characterized in that** the lifting means comprise a lever (14) which is connected in an articulated manner to the drive slide (11) by its first end and which is connected in an articulated manner to the intermediate element (B) by the second end.

7. Device according to Claim 4, 5 or 6, **characterized in that** it comprises a coupling arm (20) which is connected in an articulated manner to the drive slide (11) by a first end and is connected in an articulated manner to the intermediate element (B) by a second end.

8. Opening roof for a motor vehicle, provided with a device according to one of the preceding claims.

## Revendications

1. Dispositif pour l'actionnement d'un élément de recouvrement (2) afin, au choix, dans une première position, de fermer une ouverture (66) dans une surface (3) entourant cette ouverture, ou, dans une deuxième position, de dégager au moins partiellement l'ouverture (66), l'élément de recouvrement (2) étant notamment formé par un capot dans une ouverture dans un toit, formant la surface (3), d'un véhicule, et le dispositif comprenant les moyens suivants :
- un bras pivotant, qui s'étend d'une extrémité avant à une extrémité arrière et qui est pourvu de moyens pour la fixation de l'élément de recouvrement (2) ;
- des moyens de levage (14), afin de produire sur le bras pivotant un mouvement de pivotement par rapport à la surface (3), et
- des moyens d'entraînement (63), afin de solliciter en force les moyens de levage (14) et de déplacer l'élément de recouvrement (2) entre la première et la deuxième position,
**caractérisé en ce que** le bras pivotant comprend au moins un premier élément (A) et un troisième élément (C), qui sont assemblés à coulissement ou télescopiquement entre eux, l'extrémité (30) d'un des éléments (A) étant assemblée par l'intermédiaire d'un pivot (50) à une partie stationnaire du dispositif ou à la surface (3), et comprend un élément intermédiaire (B), qui est assemblé d'une part à coulissement au premier élément (A) et d'autre part à coulissement au troisième élément (C).

2. Dispositif selon la revendication 1, **caractérisé en ce que** les moyens pour la fixation de l'élément de recouvrement (2) sont installés sur le troisième élément (C).

3. Dispositif selon la revendication 1 ou 2, **caractérisé en ce que** les éléments (A, B, C) du bras pivotant sont réalisés sous forme d'éléments télescopiques, le premier élément (A) étant assemblé à une première extrémité d'un élément flexible (31) de traction-compression qui, au moyen d'une rainure de guidage (26) à proximité de l'extrémité de l'élément intermédiaire (B) plus éloignée, est guidé jusqu'à une fixation (40) pour une deuxième extrémité de l'élément de traction-compression (31), fixation (40) qui est installée sur le troisième élément (C).

4. Dispositif selon l'une des revendications précédentes, ce dispositif comprenant une glissière de guidage (60) qui s'étend dans la direction longitudinale de l'ouverture depuis une extrémité plus proche jusqu'à une extrémité plus éloignée, **caractérisé en ce que** les moyens d'entraînement (63) sont reliés aux moyens de levage (14) par l'intermédiaire d'un coulisseau d'entraînement (11) qui peut être déplacé dans la glissière de guidage (60) entre l'extrémité plus proche et l'extrémité plus éloignée de la glissière, les moyens de levage (14) étant assemblés à une première extrémité au coulisseau d'entraînement (11) et à une deuxième extrémité au bras pivotant.

5. Dispositif selon la revendication 4, **caractérisé en ce que** les moyens de levage (14) sont assemblés par leur deuxième extrémité à l'élément intermédiaire (B).

6. Dispositif selon la revendication 4 ou 5, **caractérisé en ce que** les moyens de levage comprennent un levier (14) qui, par sa première extrémité, est assemblé en articulation au coulisseau d'entraînement (11), et qui, par sa deuxième extrémité, est assemblé en articulation à l'élément intermédiaire (B).

7. Dispositif selon la revendication 4, 5 ou 6, **caractérisé en ce qu'**il comprend un bras d'accouplement (20) qui, par une première extrémité, est assemblé en articulation au coulisseau d'entraînement (11), et qui, par une deuxième extrémité, est assemblé en articulation à l'élément intermédiaire (B).

8. Toit ouvrant pour un véhicule, pourvu d'un dispositif selon l'une des revendications précédentes.
